Europäisches Patentamt

European Patent Office

Office européen des brevets

(11) Publication number: **0 231 831**
**A2**

# (12) EUROPEAN PATENT APPLICATION

(21) Application number: 87100938.7

(51) Int. Cl.⁴: **A21C 9/08**

(22) Date of filing: 23.01.87

(30) Priority: 24.01.86 FI 860352

(43) Date of publication of application:
**12.08.87 Bulletin 87/33**

(84) Designated Contracting States:
**AT BE CH DE ES FR GB GR IT LI LU NL SE**

(71) Applicant: **Kleimola, Pentti Kalevi**
**Vellamontie 1**
**SF-45 740 Kuusankoski(FI)**
Applicant: **Joukainen, Jukka**

**SF-49540 Metsäkylä(FI)**

(72) Inventor: **Kleimola, Pentti Kalevi**
**Vellamontie 1**
**SF-45 740 Kuusankoski(FI)**
Inventor: **Joukainen, Jukka**

**SF-49540 Metsäkylä(FI)**

(74) Representative: **Prechtel, Jörg et al**
**Patentanwälte H. Weickmann, Dr. K. Fincke**
**F.A. Weickmann, B. Huber Dr. H. Liska, Dr. J.**
**Prechtel Möhlstrasse 22 Postfach 860 820**
**D-8000 München 86(DE)**

(54) A method for automatic transfer of products in a bakery line comprising an oven with fixed grate.

(57) The invention relates to a method for automatic transfer of bread blanks from a proving drawer (1) into an oven (3) with fixed grate and for removing the baked products from the oven. According to the invention this is achieved by an emptying and filling device (5), whereby the device (5) fetches the bread blanks from the proving drawer (1), moves them to the selected grate in the oven (3), fetches the baked products from the oven (3) and transfers them on the conveyor leading to the packing department.

Fig. 1

## A method for automatic transfer of products in a bakery line comprising an oven with fixed grate

This invention relates to the automatization of a bakery line and in particular to a method for automatic transfer of unbaked products from a proving drawer or some other point of the bakery line into an oven with fixed grate and for removing the baked products from the oven.

In small bakeries, the leavening and baking of baked products is nowadays carried out by using conventional baking methods and means. Thus, in bread production, the bread blanks are manually placed on wooden boards, which are disposed into a track on wheels which subsequently is pushed into the leavening chamber. After the leavening, the bread blanks are piled with a bread shovel into the oven, of which the floor is fixed, and after the baking, the baked breads are removed from the oven by means of a bread shovel.

These conventional working methods require much labour and moreover, the various operations are very heavy, the working conditions not being very pleasant, because of the heat and the dust, among others. The monotony of the work also has a decreasing effect on the incentive to work. Moreover, the quality of the batches of baked bread may vary considerably.

In big bakeries, the preparing, leavening and baking of the dough is carried out fully automatically. Continuously operating dough preparing machines and dough cutting and shaping machines are being used. The shaped dough portions are leavened in mechanical leavening chambers from where they are conducted into high-capacity ovens baking continuously. The bread blanks pass through these high-capacity ovens for instance on a grate mesh or steel conveyor of special construction. The investment costs of such higly automatized bakery lines are extremely high. In particular high capacity ovens, provided with a mobile grate, are very expensive and require a large building space and thus are not applicable in small bakeries.

The DE patent application 2 934 369 discloses a device intended to be used in bakeries, in which the baked products are transferred into a baking oven with fixed floor and by means of which the baked products are removed from the oven. This device comprises a conveyor for conveying into the oven and removing from the oven, comprising an endless conveyor belt movable by a motor-driven cylinder. An essential member of this device is a wedge-tip disposed on the side of the conveyor towards the oven. The purpose of this wedge-shaped tip is to assist in the lifting of the baked products onto the conveyor belt as the conveyor moves into the oven in the same time as the conveyor belt moves in the opposite direction. This device is intended exclusively for filling and emptying of a bakery oven, and cannot for instance be used for fetching bread blanks from the proving drawer, as the friction between the solid wedge-shaped tip and the doughy bread blanks would be so strong, that it would prevent the bread blanks from rising onto the conveyor belt, resulting in the bread blanks accumulating into the rear section of the proving drawer. Thus, the baked products are lifted manually or by some separate device from the proving drawer onto the conveyor belt according to the DE patent application 2 934 369.

The purpose of the invention is to achieve a method for automatic transfer of unbaked products from the proving drawer or some other point into an oven with fixed floor and for removing the baked products from the oven, having a simple operation and low costs, as well as being labour-saving and appropriate in particular for small and medium-sized bakeries.

These purposes have been most satisfactorily achieved by the present invention.

The main characteristics of the invention appear from the enclosed claims.

By products, here are intended bakery products of all sizes and shapes, such as loaves of bread, rolls, buns, pies, etc.

The method according to the invention is also appropriate for conveying such products in a bakery line, that do not need to be leavened, and consequently, it is not necessary according to the invention to use a proving drawer, but the unbaked products can be transferred from som other appropriate point of the bakery line.

An emptying and filling device is used for carrying out the method according to the invention, comprising a to-and-fro movable conveyor. The emptying and filling device is horizontally movable and the conveyor is vertically movable by means of an elevator.

The emptying and filling device is controlled by logic and the proving drawer and oven are connected to operate as an automatic process line with this device.

According to a preferred embodiment, the method according to the invention comprises the following steps in an optional order:

a) the emptying and filling device is vertically moved into the line of the proving drawer and if necessary, the conveyor is vertically moved to the level of the platform of the proving drawer,

b) the conveyor is moved into the proving drawer, the conveyor belt moving essentially at the same rate into the opposite direction, whereby a certain batch of unbaked products moves from the platform onto the conveyor belt, and subsequently the con veyor is removed from the proving drawer, the conveyor belt being at a standstill,

c) the emptying and filling device is vertically transferred into the line of the selected grate, and if necessary, the conveyor is transferred vertically to the level of the selected grate,

d) the conveyor is transferred into the oven, the conveyor belt being at a standstill and subsequently the conveyor is removed from the oven, the conveyor belt moving essentially at the same rate into the opposite direction, whereby the said batch of unbaked products moves onto the grate,

e) steps a) -d) are repeated as many times as needed

f) the emptying and filling device is horizontally moved into the line of the selected grate and if necessary, the conveyor is vertically moved to the level of the selected grate,

g) the conveyor is transferred into the oven as the conveyor belt moves essentially at the same rate into the opposite direction, whereby the batch of baked products moves from the grate onto the conveyor belt, and subsequently the conveyor is removed from the oven, the conveyor belt being at a standstill,

h) the batch of baked products on the conveyor belt is transferred onto a conveyor leading to the packing department,

i) steps f) -h) are repeated as many times as required by step e).

According to the invention, the various operations have been programmed so that the leavening and baking periods of each product have been optimized in order to correspond to the correct baking and leavening periods.

The invention is described in detail below with reference to the enclosed drawings, in which

figure 1 represents a schematic perspective in principle of a bakery line, which is automatized according to the invention, and

figures 2A-2F illustrate the different steps of the method according to the invention.

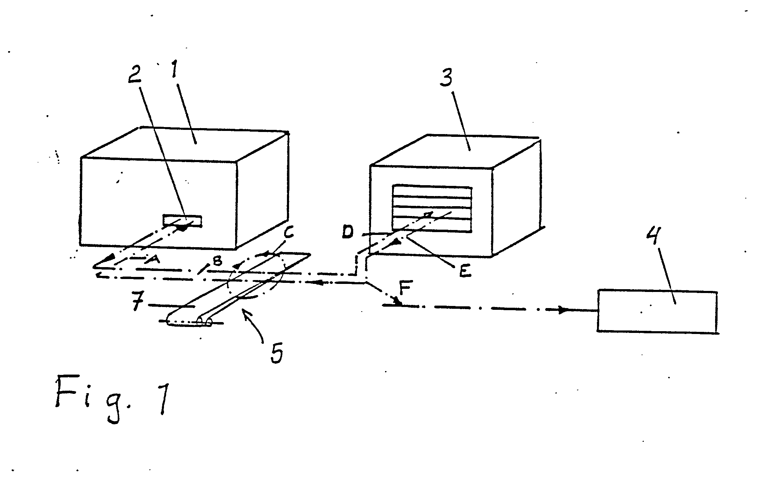

Figure 1 represents a proving drawer marked by the numerical reference 1. The proving drawer 1 is advantageously of a type in which the platforms, i.e. the bottoms for the bread blanks, move axially transversally along a closed trajectory. The humidity and temperature of the proving drawer 1 are advantageously automatically adjusted. The drawer 1 has an outlet 2 for the bread blanks, of which the width advantageously corresponds to the width of one or two platforms. The oven has the numerical reference 3. The oven is provided with a fixed floor.

The proving drawer 1 and oven 3 are connected so as to operate as an automatic process line together with the logically controlled emptying and filling device 5. The emptying and filling device comprises a to-and-fro moving conveyor section, including the conveyor belt 7.

Through the opening 2 the device 5 fetches the bread blanks from the proving drawer 1 and transfers them according to the program onto the selected grate in the oven 3. The device 5 also fetches the baked loaves of bread from the oven and transfers them onto the belt conveyor leading to the packing department 4.

The different functions of the emptying and filling device 5 are marked by the letters A-F in figure 1, in which

A represents the emptying step of the proving drawer 1,

B represents the transfer step of the device 5 horizontally and vertically,

C represents the possible circular movement of the device 5, which becomes virtual when the outlet 2 of the proving drawer and the feeding side of the oven 3 do not open into the same direction,

D represents the filling step of the oven 3,

E represents the emptying step of the oven 3,

F represents the unloading step of the baked loaves of bread.

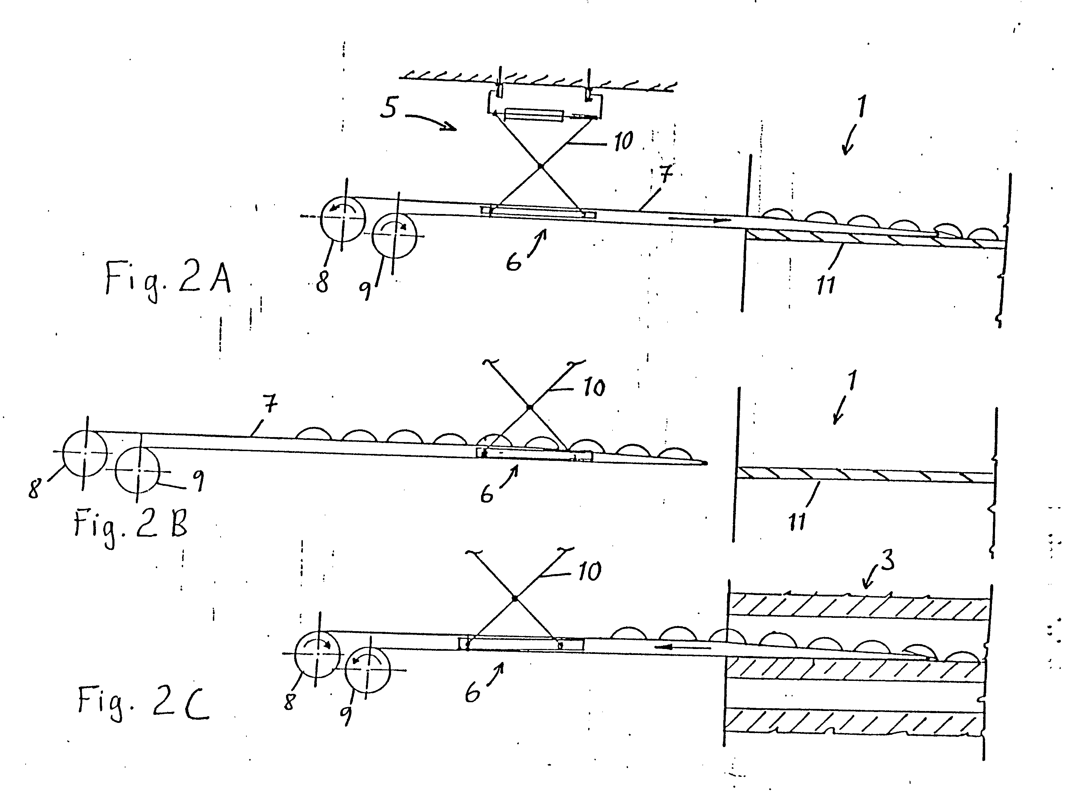

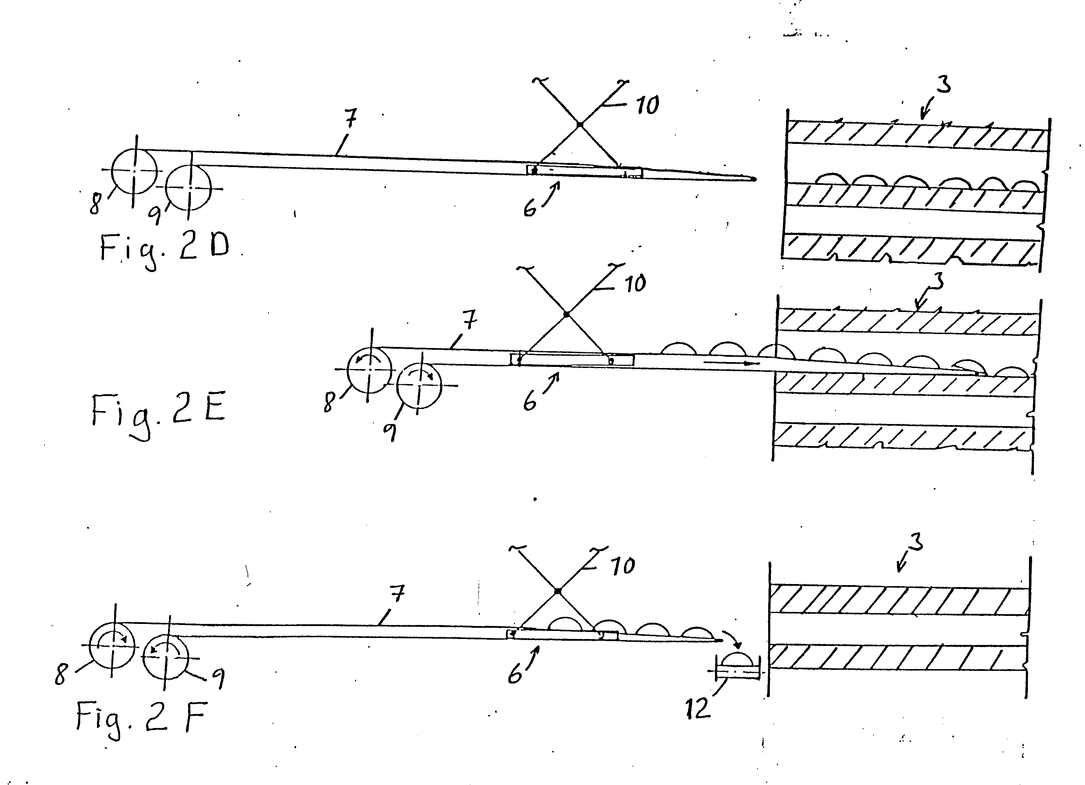

The above steps are described in detail below with reference to figures 2A-2F.

In figures 2A-2F the emptying and filling device is marked with the reference 5. The device 5 is suspended on the roof constructions of the bakery and is disposed to move horizontally on rails. The conveying section 6 of the device 5 is disposed to move to-and-fro. The conveyor belt 7 of the conveying section is moved by means of two rolling cylinders, which cooperate by gearing (not represented in the figure) so that they roll at the same rate into opposite directions. The conveyor section 6 is also vertically movable by an elevator 10 of claw crane type.

Figure 2A illustrates the emptying step of the proving drawer 1 (step A in figure 1). The conveying sector 6 of the emptying and filling device moves into the proving drawer 1 at the rate v and simultaneously the conveyor belt 7 of the conveying section 6 moves at the rate u, which is equal to or somewhat higher than v, into the opposite direction, whereby the bread blanks move onto the belt 7 remaining at their places or, when u is somewhat higher than v, moving to some extent outwards from the proving drawer. When the bread blanks have moved from the platform 11 onto the belt 7, the belt stops and the conveying section 6 moves out from the proving drawer 1.

The emptying and filling device 5 is now in the position represented in figure 2B. The device 5 now moves up to the selected grate (steps B and C in figure 1). Depending on the position of the grate, the device 5 is made to move horizontally and possibly vertically and possibly to make a circular movement.

Figure 2C illustrates the filling step of the oven 3 (step D in figure 1). The conveying section 6 moves from the level of the grate inside the oven, the unloading of the bread blanks is started from the rear of the oven, so that the conveying section 6 moves at the rate v out from the oven and simultaneously the con veyor belt 7 moves at the rate u into the opposite direction. Thus, the bread blanks stay on the grate of the oven 3.

The device 5 is now in the position illustrated by figure 2 D. The device 5 moves subsequently into its initial position, i.e. up to the proving drawer 1 (steps B and C in figure 1) and the emptying step of the proving drawer, the transfer step of the device 5 and the filling step of the oven, described above, (steps A-D in figure 1) are repeated until the oven is filled with the number of bread blanks intended.

Figure 2E illustrates the emptying step of the oven 3 (step E in figure 1) the conveying section 6 moves into the oven 3 at the rate v and simultaneously the conveyor belt 7 of the conveying section 6 moves at essentialy the same rate into the opposite direction, whereby the baked loaves of bread move onto the belt 7. When the baked loaves of bread have moved from the grate onto the belt 7, the belt stops and the conveying section 6 moves out from the oven 3.

Figure 2F illustrates the unloading step of the baked loaves of bread (step F in figure 1). If the conveying section 6 is not on the level of the bottom grate, it moves to this level. The conveyor belt 7 moves, whereby the baked loaves of bread move onto the belt conveyor 12, which takes the loaves of bread to the packing department.

Thereafter, the emptying step of the oven 3 and the unloading step of the baked loaves of bread described above are repeated (steps E and F in figure 1) as many times as required by the emptying steps of the proving drawer, the transfer steps of the emptying and filling device and the filling steps of the oven, as described above.

## Claims

1. A method for automatic transfer of products from a bakery line comprising an oven with fixed grate by means of an emptying and filling device - (5), which comprises a conveying device (6) movable to-and-fro, in which a conveyor belt (7) is provided, **characterized** in that certain batches of unbaked products are moved from the proving drawer (1) or some other point of the bakery line one by one to a selected grate in the oven (3) and the baked batches of products are removed from the oven in the same order in which they were brought into the oven, and in that these operations are carried out with an emptying and filling device - (5) of the above type, which is characterized in that the conveying belt (7) extends over the formost section of the conveying device (6) forming a horizontal narrow tip section, which enables the unbaked and baked products to rise onto the said conveying belt (7), whereby a batch of unbaked products is transferred into the oven so that the conveying device (6) is transferred into the proving drawer (1) or some other point of said bakery line as the conveying belt (7) moves into the opposite direction, whereby a certain batch of unbaked products moves onto the conveyor belt (7) and subsequently the conveying device (6) is transferred, the conveyor belt (7) being at a standstill, into the oven above a selected grate, whereafter the conveying device (6) is removed from the oven (3), the conveyor belt moving into the opposite direction, whereby the said batch of products moves onto the grate; and the baked batch of products is removed from the oven so that the conveying device (6) is transferred into the oven (3) as the conveyor belt - (7) moves into the opposite direction, whereby the batch of baked products moves onto the conveyor belt (7), whereafter the conveying device (6) is removed from the oven, the conveyor belt (7) being at a standstill.

2. A method according to claim 1, **characterized** in that it comprises an additional step, in which the batch of baked products on the conveyor belt (7) is unloaded onto a conveyor (12) leading to the packing department (4).

3. A method according to either claim 1 or 2, **characterized** in that the following steps are carried out in an optional order:

a) the emptying and filling device (5) is moved horizontally into the line of the proving drawer (1) and if necessary, the conveying device - (6) is moved vertically to the level of the platform - (11) of the proving drawer,

b) the conveying device (6) is moved into the proving drawer (1) as the conveyor belt (7) moves at essentially the same rate into the opposite direction, whereby a determined batch of unbaked products is transferred from the platform - (11) onto the conveyor belt, and subsequently the conveying device is removed from the proving drawer, the conveyor belt being at a standstill,

c) the emptying and filling device (5) is moved horizontally into the line of the selected grate and if necessary, the conveying device (6) is moved vertically to the level of the selected grate,

d) the conveying device (6) is moved into the oven (3), the conveyor belt (7) being at a standstill and subsequently the conveying device is removed from the oven, as the conveyor belt moves at essentially the same rate into the opposite direction, whereby the said batch of unbaked products moves onto the grate,

e) steps a) -d) are repeated as many times as desired,

f) the emptying and filling device (5) is moved horizontally to the line of the selected grate and if necessary, the conveying device (6) is moved vertically to the level of the selected grate,

g) the conveying device (6) is moved into the oven 83) as the conveyor belt (7) moves essentially at the same rate into the opposite direction, whereby the batch of baked products moves from the grate onto the conveyor belt, and subsequently the conveyor device is removed from the oven, the conveyor belt being at a standstill,

h) the batch of baked products on the conveyor belt (7) is transferred to the conveyor (12) leading to the packing department (4),

i) steps f) -h) are repeated as many times as required by step e).

Fig. 1

Fig. 2A

5

10

7

8 9

6

1

11

Fig. 2B

7

10

8 9

6

1

11

Fig. 2C

10

8 9

6

3

0 231 831

Fig. 2 D.

Fig. 2 E

Fig. 2 F